Europäisches Patentamt

European Patent Office

Office européen des brevets

(11) Veröffentlichungsnummer: **0 302 275**
**A2**

## (12) EUROPÄISCHE PATENTANMELDUNG

(21) Anmeldenummer: 88111260.1

(22) Anmeldetag: 13.07.88

(51) Int. Cl.4: **G02F 2/00 , H04B 9/00**

(30) Priorität: 04.08.87 DE 3725827

(43) Veröffentlichungstag der Anmeldung:
08.02.89 Patentblatt 89/06

(84) Benannte Vertragsstaaten:
**DE FR GB NL**

(71) Anmelder: **Siemens Aktiengesellschaft Berlin und München**
**Wittelsbacherplatz 2**
**D-8000 München 2(DE)**

(72) Erfinder: **Schiffner, Gerhard, Prof., Dr.**
**Eilper Höhe 30**
**D-5802 Wetter 2(DE)**

(54) **Vorrichtung zum Detektieren intensitätsmodulierter Lichtsignale.**

(57) Es soll eine Vorrichtung zum Detektieren intensitätsmodulierter Lichtsignale angegeben werden, die relativ zu einer bisherigen Vorrichtung, die mit einer optischen Detektoreinrichtung zum Detektieren eines intensitätsmodulierten optischen Signals, einer nachgeschalteten Mischstufe in Form einer elektronischen Mischeinrichtung und einem nachgeschalteten Lock-in-Verstärker besteht, eine höhere Empfindlichkeit aufweist.

Dazu besteht die Mischstufe aus einer optischen Mischeinrichtung (StRK), in die das optische Signal einkoppelbar ist und aus der das Mischsignal (MS1, MS2) als Lichtsignal entnehmbar ist, und das Mischsignal (MS1, MS2) wird einer optischen Detektoreinrichtung (DE1) zugeleitet.

Anwendung überall dort, wo intensitätsmodulierte Lichtsignale zu detektieren sind, beispielsweise in der optischen Nachrichtentechnik.

EP 0 302 275 A2

## Vorrichtung zum Detektieren intensitätsmodulierter Lichtsignale

Die Erfindung betrifft eine Vorrichtung zum Detektieren intensitätsmodulierter Lichtsignale nach dem Oberbegriff des Patentanspruchs 1.

In der modernen Optik tritt häufig der Fall auf, daß ein mit einer periodischen Schwingung, beispielsweise mit einer sinus-oder rechteckförmigen Schwingung intensitätsmoduliertes Lichtstrahlenbündel aus dem sichtbaren, dem infraroten oder auch ultravioletten Bereich detektiert werden muß. Diese Strahlung kann sich frei ausbreiten oder aber auch in einem Lichtwellenleiter geführt werden. Hierbei kommt es darauf an, ein Signal zu erhalten, das der Amplitude der Intensitätsschwankung der Grundwelle oder aber auch einer Oberwelle proportional ist. Für dieses Signal reicht meist eine relativ kleine Bandbreite aus, beispielsweise in der Größenordnung von 1 Hz. Die Frequenz der periodischen Schwingung liegt üblicherweise in der Größenordnung zwischen 10 Hz und vielen MHz. Es besteht das Problem, die Vorrichtung möglichst empfindlich zu machen, d.h. es soll auch bei einem sehr schwachen Lichtsignal das zur Intensitätsschwankung proportionale Ausgangssignal möglichst wenig Rauschen enthalten.

Das genannte Problem tritt beispielsweise in Faser-Ringinterferometern oder Ringresonatoren auf, die als Rotationssensoren eingesetzt werden, sowie in Geräten zur Aufnahme von Absorptionsspektren, beispielsweise zur Messung der Dämpfung von Lichtwellenleiter-Strecken. Hier wird zur leichteren Detektierbarkeit häufig mit moduliertem Licht gearbeitet.

Das genannte Problem wurde bisher auf folgende Weise gelöst: Das zu detektierende intensitätsmodulierte Lichtsignal wird einer optischen Detektoreinrichtung mit einem optoelektrischen Detektor zur Umwandlung von Lichtintensität in entsprechende Leistung und mit einem an den Detektor angeschlossenen Arbeitswiderstand zugeleitet. Dabei müssen der elektrische Signalkreis und ein Vorverstärker eine so große Bandbreite aufweisen, daß die dem Lichtstrahlenbündel aufgeprägte periodische Schwingung noch gut und verzerrungsfrei verstärkt wird. Danach wird das elektrische Signal einem Lock-In-Verstärker zugeführt, der eine Misch- oder Multiplizierstufe und ein Tiefpaßfilter, beispielsweise in Form eines Integrators, enthält.

Die elektrische Mischstufe erhält neben dem einen elektrischen Signal auch ein anderes elektrisches Signal, das von einem elektronischen Oszilator geliefert wird und bei dem eine schwankende Signalgröße entsprechend der Frequenz und Phase der modulierten und zu detektierenden Intensität des einen Signals schwingt. Dies wird meist durch externe Synchronisierung erreicht.

An einem Ausgang der Mischstufe ist ein aus dem einen und anderen elektrischen Signal gebildetes Mischsignal entnehmbar, das nach Filterung in dem Tiefpaßfilter oder Integrator der Amplitude der modulierten Intensität oder Intensitätsschwankung entspricht. Je größer die Integrationszeit gewählt wird, um so größer wird dabei das Signal-Rausch-Verhältnis.

Aufgabe der Erfindung ist es, eine Vorrichtung der eingangs genannten Art anzugeben, die relativ zur bisherigen Vorrichtung höhere Empfindlichkeit aufweist.

Diese Aufgabe wird durch die im kennzeichnenden Teil des Patentanspruchs 1 angegebenen Merkmale gelöst.

Danach ist bei der erfindungsgemäßen Vorrichtung wesentlich, daß das intensitätsmodulierte Lichtsignal bereits vor der Detektion in der Detektoreinrichtung mit dem anderen Signal gemischt oder multipliziert und erst danach von dem optoelektrischen Detektor in ein elektrisches Signal umgewandelt wird.

Ein wesentlicher Vorteil der erfindungsgemäßen Vorrichtung liegt darin, daß der an den optoelektrischen Detektor angeschlossene und den Arbeitswiderstand enthaltende elektrische Schaltkreis nur eine geringe zeitliche Auflösung aufweisen muß und daher extrem große Arbeitswiderstände verwendet werden können, mit denen die Empfindlichkeit der Vorrichtung wesentlich erhöht werden kann.

Die Erfindung geht von der erkannten Tatsache aus, daß bei gegebener elektrischer Signalbreite das Signal-Rausch-Verhältnis eines optoelektrischen Detektors der Größe des Arbeitswiderstandes proportional ist. Der Arbeitswiderstand kann jedoch bei der herkömmlichen Vorrichtung wegen der endlichen Kapazitäten im elektrischen Schaltkreis, der die Eigenkapazität des optoelektrischen Detektors, Schaltkapazitäten und eine Eingangskapazität eines Vorverstärkers umfaßt, nicht beliebig hoch gewählt werden. Die Zeitkonstante der Parallelschaltung von Arbeitswiderstand und resultierender Kapazität sollte kleiner als die Periodendauer der dem Lichtstrahlenbündel aufmodulierten Schwingung sein. Bei Verwendung von Transimpedanz-Verstärkern oder Strom-Spannungswandlern spielt die Kapazität eine untergeordnete Rolle, doch begrenzt das Eigenrauschen des Vorverstärkers die Empfindlichkeit. Bei kleinen Signalbandbreiten liefert eine Anordnung mit großem Arbeitswiderstand und nachgeschaltetem Vorverstärker mit hohem Eingangswiderstand bessere Ergebnisse.

Der genannte Vorteil der erfindungsgemäßen Vorrichtung ist so zu verstehen, daß bei der erfindungsgemäßen Vorrichtung der Arbeitswiderstand einen extrem höheren Wert haben kann, als der Arbeitswiderstand bei der genannten bisherigen Vorrichtung, wobei dies insbesondere auch dann gilt, wenn beide Vorrichtungen für die gleiche Bandbreite ausgelegt sind.

Darüber hinaus ist darauf hinzuweisen, daß ein Lock-In-Verstärker, wie er bei der oben beschriebenen bisherigen Vorrichtung im wesentlichen durch den Oszillator, die Mischstufe und das Tiefpaßfilter oder den Integrator gegeben ist, Rauschen innerhalb eines Bandes mit der doppelten Bandbreite des Tiefpaßfilters aufnimmt. Die erfindungsgemäße Vorrichtung nimmt dagegen nur Rauschen innerhalb eines Bandes auf, das der einfachen Bandbreite der Detektoreinrichtung entspricht, die bei beiden Vorrichtungen gleich ausgebildet sind oder sein kann.

Das Verhältnis zwischen dem Signal-Rausch-Verhältnis der erfindungsgemäßen Vorrichtung zu dem Signal-Rausch-Verhältnis der genannten bisherigen Vorrichtung ist durch das Verhältnis zwischen der doppelten Modulationsfrequenz zur Bandbreite gegeben. Da die Modulationsfrequenz im MHz-Bereich liegt und die Bandbreite des genannten Bandes im Bereich von Hz liegen kann, zeigt dieses Verhältnis zwischen den Signal-Rausch-Verhältnissen deutlich die mit der erfindungsgemäßen Vorrichtung gegenüber herkömmlichen Vorrichtungen der eingangs genannten Art zu erzielenden großen Vorteile an.

Eine bevorzugte und vorteilhafte Ausgestaltung der erfindungsgemäßen Vorrichtung ist im Anspruch 2 angegeben.

Bevorzugte und vorteilhafte Ausführungsformen der Vorrichtung nach Anspruch 2 sind in den Ansprüchen 3 und 4 angegeben.

Bei der erfindungsgemäßen Vorrichtung kann das intensitätsmodulierte Lichtsignal selbst in die Mischstufe eingegeben werden. Die Frequenz des anderen Signals kann gleich der Modulationsfrequenz des intensitätsmodulierten Lichtsignals sein, wobei beide Signale vorzugsweise synchronisiert sind (Anspruch 5).

Die Frequenz des anderen Signals muß aber nicht notwendig mit der Modulationsfrequenz übereinstimmen, sondern kann von dieser verschieden sein. Eine derartige Vorrichtung arbeitet dann zwangsweise mit einem dem Mischsignal aufgeprägten Schwebungssignal, dessen Frequenz der Differenz zwischen dem Modulationssignal und der Frequenz des anderen Signals entspricht. Eine erfindungsgemäße Vorrichtung, die mit einer derartigen Diffe renzfrequenz arbeiten kann, ist im Anspruch 6 angegeben.

Diese Anordnung nach Anspruch 6 hat den Vorteil, daß bei entsprechender Wahl der Differenz zwischen der Modulationsfrequenz und der Frequenz des anderen Signals, beispielsweise im Bereich um 100 Hz, noch ein großer Gewinn im Signal-Rausch-Verhältnis erhalten wird, wenn die Modulationsfrequenz wesentlich größer als 100 Hz ist, und daß darüberhinaus noch ein Funkelrauschen reduziert wird, das ungünstig ist.

Bevorzugte und vorteilhafte Ausgestaltungen der Vorrichtung nach Anspruch 6 gehen aus den Ansprüchen 7 und 8 hervor.

Als optische Mischeinrichtung sind elektrooptische Modulatoren, insbesondere optische Richtkoppler oder Polarisationsmodulatoren in Verbindung mit Polarisationsweichen geeignet. Die Ansprüche 9 bis 12 sind auf bevorzugte Vorrichtungen mit derartigen Modulatoren gerichtet.

Eine erfindungsgemäße Vorrichtung läßt sich zur empfindlichen Detektion von periodischen Intensitätsschwankungen optischer Signale einsetzen. Solche Signale treten beispielsweise in Interferometeranordnungen auf, in denen beispielsweise ein mit einem periodischen Signal angesteuerter Phasenmodulator enthalten ist. Ein Beispiel für ein solches Interferometer ist der faseroptische Rotationssensor.

Ferner kann eine erfindungsgemäße Vorrichtung zur Aufnahme von Absorptionsspektren, insbesondere zur Messung des Dämpfungsverlaufs in Lichtleitfasern oder Lichtwellenleitern eingesetzt werden, wobei mit intensitätsmoduliertem Licht gearbeitet wird, dessen Wellenlänge über dem interessierenden Bereich durchgestimmt wird. Bei Anwendung von mit der Modulationsfrequenz frequenzmoduliertem Licht kann die Ableitung der Absorption über der Wellenlänge direkt gemessen werden (Umwandlung von Frequenzmodulation in Intensitätsmodulation).

Die erfindungsgemäße Vorrichtung kann insbesondere auch in der optischen Nachrichtentechnik angewendet werden. Für Licht wellenleiter-Übertragungsstrecken mit Intensitätsmodulation kann die Vorrichtung zur Synchronisierung eines elektronischen Oszillators mit dem Takt digitaler optischer Impulsgruppen herangezogen werden. Hierzu kann z.B. ein kleiner Teil der eintreffenden Lichtleistung für diese Taktgewinnung abgezweigt werden. Die erfindungsgemäße Anordnung kann bei sehr langen Übertragungsstrecken mit hoher Dämpfung noch sicher arbeiten, wenn der für die Demodulation der digitalen Signale vorgesehene optoelektrische Detektor bereits ein geringes Signal-Rausch-Verhältnis aufweist.

Bei optischem Überlagerungsempfang, der Heterodyn- und Homodynempfang umfaßt und der für moderne optische Übertragungssysteme voraussichtlich zum Einsatz kommt, ist zu beachten, daß nach Überlagerung des zu empfangenden optischen Signals mit dem Signal des lokalen Oszillator-Lasers ein intensitätsmoduliertes optisches Signal entsteht. Bei Anwendung der Phasenumtastung (PSK) und Homodynempfang entsteht beispielsweise ein Signal, das mit der beschriebenen erfindungsgemäßen Vorrichtung beispielsweise zur Taktgewinnung verarbeitet werden kann.

Die Erfindung wird anhand der Figuren in der folgenden Beschreibung näher erläutert. Von den Figuren zeigen:

Figur 1 eine herkömmliche Vorrichtung, bei welcher das intensitätsmodulierte Lichtsignal direkt der optischen Detektoreinrichtung zugeleitet ist, der ein Lock-In-Verstärker nachgeschaltet ist, und bei der die Frequenz des anderen Signals mit der Modulationsfrequenz des intensitätsmodulierten Lichtsignals übereinstimmt,

Figur 2 eine Ausführungsform einer erfindungsgemäßen Vorrichtung mit einer optischen Mischeinrichtung in Form eines steuerbaren optischen Richtkopplers, bei der ebenfalls die Frequenz des anderen Signals mit der Modulationsfrequenz des intensitätsmodulierten Lichtsignals übereinstimmt,

Figur 3 eine optische Mischeinrichtung mit einem elektrooptischen Modulator, der aus einem Polarisationsmodulator und einer Polarisationsweiche besteht, und

Figur 4 eine Ausführungsform der erfindungsgemäßen Vorrichtung mit einem elektrooptischen Modulator in Form eines steuerbaren Richtkopplers, bei welcher die Frequenz des anderen Signals nicht mit der Modulationsfrequenz übereinstimmt.

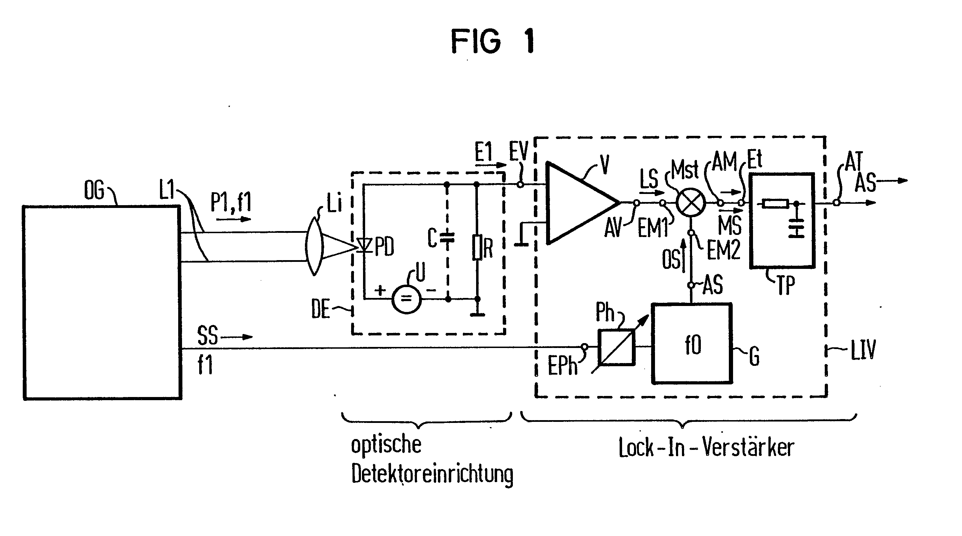

Bei der herkömmlichen Anordnung nach Figur 1 sendet beispielsweise ein optisches Gerät OG ein Lichtsignal L1 aus, dessen Intensität P1 zeitlich variiert und mit einer Modulationsfrequenz f1 moduliert ist.

Das Lichtsignal L1 trifft auf einen optoelektrischen Detektor PD einer optischen Detektoreinrichtung DE, der beispielsweise eine Photodiode sein kann, auf die das Lichtsignal L1 durch eine Linse Li fokussiert wird.

Der optoelektrische Detektor PD wandelt das amplituden- und damit auch intensitätsmodulierte Lichtsignal L1 in ein entsprechendes moduliertes elektrisches Signal E1 um, das einem Eingang EV eines eingangsseitigen Vorverstärkers V eines Lock-In-Verstärkers LIV zugeleitet ist.

Ein elektrischer Schaltkreis der optischen Detektoreinrichtung DE ist ersatzschaltbildmäßig dargestellt. Mit R ist der zur Photodiode PD parallel geschaltete Arbeitswiderstand dieser Diode bezeichnet. Die zu diesem Widerstand parallel geschaltete Kapazität C kennzeichnet die gesamte Kapazität im elektrischen Schaltkreis. Mit U ist eine in diesen elektrischen Schaltkreis geschaltete Gleichspannungsquelle bezeichnet, die als eine Vorspannungsquelle dient.

Der Arbeitswiderstand R und die Kapazität C sind so gewählt, daß die durch das Produkt ihrer Werte definierte Zeitkonstante $\tau = R \cdot C$ kleiner als $1/2\,\pi \cdot f1$ ist.

Das dem Vorverstärker V zugeleitete elektrische Signal E1 wird im Verstärker V verstärkt und einem Ausgang AV dieses Verstärkers V als das eine elektrische Signal LS ausgegeben, das der modulierten und zu detektierenden Intensität P1 des Lichtsignals L1 entspricht.

Das eine Signal LS wird einem Eingang EM1 einer Mischstufe MSt in Form einer elektronischen Mischeinrichtung zugeleitet, in die über einen anderen Eingang EM2 das andere Signal OS mit der vorbestimmten Frequenz f0 einkoppelbar ist. An einem Ausgang AM der Mischstufe MSt ist das Mischsignal MS entnehmbar.

Das elektrische andere Signal OS mit der vorbestimmten Frequenz f0 wird von einem elektronischen Oszillator G geliefert. Im vorliegenden Fall stimmt das andere Signal OS in Frequenz und Phase mit der zu detektierenden intensitätsmodulierten Schwingung, d.h. der modulierten Intensität P1 überein. Dies kann beispielsweise durch externe Synchronisation erreicht werden. Dazu wird die Frequenz f0 des Oszillators G gleich der Modulationsfrequenz f1 gewählt und eine Phasenabgleichung zwischen den beiden Signalen mit den Frequenzen f0 und f1 durchgeführt. Dies kann in bekannter Weise mittels eines Phasenschiebers Ph erfolgen, dem über einen Eingang EPh ein Signal SS zugeführt wird, das in Frequenz und Phase mit dem einen Signal LS übereinstimmt. Nach dem Phasenabgleich stimmt dann auch das an einem Ausgang AG des Oszillators G abgegebene andere Signal OS in Frequenz und Phase mit dem einen Signal LS überein.

Das am Ausgang AM der Mischstufe MSt entnehmbare Mischsignal MS wird einem Eingang ET eines Tiefpaßfilters TP zugeleitet, der eine bestimmte Bandbreite B hat.

In dem Tiefpaßfilter TP wird das Mischsignal MS gefiltert, so daß das an einem Ausgang AT des Tiefpaßfilters TP entnehmbare, tiefpaßgefilterte elektrische Ausgangssignal AS in der Amplitude proportional zu den Schwankungen der Intensität P1 des Lichtsignals L1 ist.

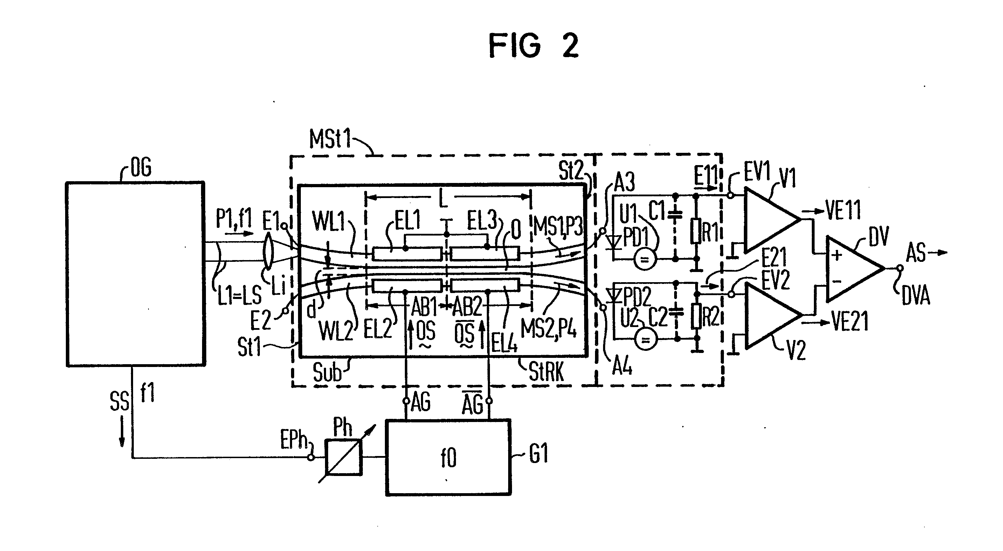

Während bei der bekannten Vorrichtung nach Figur 1 die Mischstufe MSt eine elektrische Mischstufe ist, die mit elektrischen Signalen beaufschlagt wird und die auch ein elektrisches Mischsignal ausgibt, besteht bei der neuen Vorrichtung nach Figur 2 die Mischstufe MSt1 aus einer optischen Mischeinrichtung StRK, in die das Lichtsignal L1, dessen Intensität P1 mit der Modulationsfrequenz f1 moduliert ist, direkt als das eine Signal LS einkoppelbar ist und aus welcher das Mischsignal MS1 und/oder MS2 als Lichtsignal entnehmbar ist. Dieses optische Mischsignal MS1 und/oder MS2 wird dem optoelektrischen Detektor PD1 bzw. PD2 der optischen Detektoreinrichtung DE1 zugeleitet.

Bei der Vorrichtung nach Figur 2 besteht beispielsweise die optische Mischeinrichtung StRK aus einem elektrooptischen Modulator in Form eines steuerbaren optischen Richtkopplers, dessen Koppelstärke durch das andere Signal OS steuerbar ist.

Beispielsweise besteht der optische Richtkoppler StRK nach Figur 2 aus zwei optischen Streifenwellenleitern WL1 und WL2, die auf oder in ein Substrat Sub aus elektrooptischem Material integriert und innerhalb einer Koppelstrecke L in so geringem Abstand d parallel zueinander geführt sind, daß in dieser Koppelstrecke L das in einem Wellenleiter WL1 oder WL2 geführte Licht auf den anderen Wellenleiter WL2 bzw. WL1 überkoppeln kann. Die vier Enden oE1, oE2, oA3 und oA4 der beiden Lichtwellenleiter WL1, WL2, die sich beispielsweise in voneinander abgekehrten Endflächen St1 und St2 des Substrats Sub befinden, bilden vier Tore des Richtkopplers StRK, über die jeweils Licht ein- und/oder auskoppelbar ist.

Bei der Vorrichtung nach Figur 2 wird beispielsweise das obere linke Tor oE1 als optischer Eingang zum Einkoppeln des einen Signals LS in den Wellenleiter WL1 benutzt. Das linke untere Tor oE2 bleibt ungenutzt, d.h. über dieses Tor wird Licht weder ein- noch ausgekoppelt. Dies kann durch Sperren dieses Tores oE2 mit einer lichtundurchlässigen und/oder lichtabsorbierenden Schicht bewirkt werden, die auf die betreffende Endfläche St1 des Substrats aufgebracht wird. Das rechte obere Tor oA3 und das rechte untere Tor oA4 werden jeweils zum Auskoppeln von Licht aus dem Richtkoppler StRK benutzt.

Die Koppelstärke läßt sich durch Erzeugen eines elektrischen Feldes im Material der Wellenleiter mittels der in der Koppelstrecke L angeordneten Elektroden EL1 bis EL4 beeinflussen. Dies geschieht über die Steuerung der Ausbreitungskonstanten der Wellenleiter über den elektrooptischen Effekt (Beeinflussung der Brechzahlen). Stimmen die Ausbreitungskonstanten überein, dann kann man eine große Überkopplung erhalten; weichen die Ausbreitungskonstanten stark voneinander ab, dann ist die Überkopplung in den anderen Wellenleiter gering. Der in Figur 2 eingezeichnete Koppler wird in der Literatur als $\Delta\beta$- Umkehrkoppler bezeichnet ($\Delta\beta$ ist der Unterschied der Ausbreitungskonstanten der beiden Wellenleiter). Durch Anlegen einer zeitlich schwankenden elektrischen Spannung an die Elektroden entsteht ein zeitlich schwankendes elektrisches Feld in den Wellenleitern und hierdurch entsteht eine zeitlich schwankende Koppelstärke. Wenn diese schwankende Koppelstärke in Frequenz und Phase mit dem anderen Signal OS übereinstimmt und das Lichtsignal L1 beispielsweise mit Hilfe der Linse Li über den optischen Eingang oE1 in den Wellenleiter WL1 eingekoppelt wird, kann der Richtkoppler StRK eine optische Mischstufe MSt1 bilden, die die Funktion einer elektrischen Mischstufe übernehmen kann, wie sie in der herkömmlichen Vorrichtung nach Figur 1 enthalten ist.

Es ist prinzipiell jeder optische Modulator verwendbar, der einen Eingang zum Einkoppeln des einen Signals LS und mindestens einen Ausgang aufweist, auf den die eingekoppelte optische Signalleistung P1 in Abhängigkeit von einer Signalgröße des anderen Signals OS überkoppelt und dort auskoppelbar ist, wobei die ausgekoppelte Signalleistung das Mischsignal bildet. Auch ist prinzipiell jeder derartige Modulator verwendbar, der neben dem einen optischen Ausgang einen anderen optischen Ausgang aufweist, auf den die eingekoppelte Signalleistung in Abhängigkeit von einer Signalgröße des anderen Signals OS überkoppelt und dort auskoppelbar ist, wobei auch die dort ausgekoppelte Signalleistung als ein Mischsignal verwendbar ist. Derartige Modulatoren einschließlich der steuerbaren Richtkoppler können mit Hilfe der aus der Hochfrequenztechnik bekannten Streumatrix definiert werden.

Die Modulationskennlinie solcher Modulatoren ist in der Praxis meist sinusförmig und damit im ganzen nichtlinear. Bei großer Aussteuerung führen Nichtlinearitäten zu Oberschwingungen und Kombinationsschwingungen, die im ausgekoppelten Mischsignal enthalten sind. Diese Oberschwingungen und Kombinationsschwingungen lassen sich vermeiden, wenn Modulatoren mit linearer Modulationskennlinie verwendet werden. Diese Bedingung läßt sich auch bei nichtlinearen Modulationskennlinien dann erfüllen, wenn in einem Kennlinienbereich ausgesteuert wird, in dem die Modulationskennlinie hinreichend linear ist.

Bei sinusförmiger Modulationskennlinie ist ein solcher linearer Bereich in der Mitte zwischen einem Minimum und einem Maximum dieser Kennlinie mit guter Näherung gegeben. Es muß nur dafür gesorgt werden, daß die Aussteuerung um diese Mitte ausreichend klein gemacht wird.

Unter der Annahme, daß die Modulationskennlinie des Modulators linear ist, daß das mit der Modulationsfrequenz f1 intensitätsmodulierte eine Signal LS und damit das mit der bestimmten Frequenz f0 schwingende, steuernde andere Signal OS jeweils sinusförmig sind, wobei der Modulationsgrad des anderen Signals OS kleiner oder gleich 1 ist, kann unter Heranziehung der genannten Streumatrix gezeigt werden, daß bei einem optischen Modulator mit zwei optischen Ausgängen, beispielsweise dem optischen Richtkoppler StRK mit den beiden optischen Ausgängen oA3 und oA4, die aus den beiden optischen Ausgängen ausgekoppelten Lichtsignale jeweils zeitlich schwankende Intensitäten P3 und P4 aufweisen, welche jeweils die Frequenzen f0, f1, f1 + f0 und f1- f0 enthalten, wobei für die Intensitäten P1, P3 und P4 als Funktionen der Zeit

$$P3(t) + P4(t) = a \cdot P1(t)$$

mit a $\leq$ 1 gilt. Bei der Annahme eines verlustlosen Modulators gilt a = 1.

Konkrete Ausführungsformen des zuletzt geschilderten allgemeinen optischen Modulators werden später beschrieben. Zunächst sei auf die Ausgangsseite der Vorrichtung nach Figur 2 eingegangen, wobei der genannte allgemeine Modulator mit zwei optischen Ausgängen zugrundegelegt ist.

Die in Figur 2 enthaltene optische Detektoreinrichtung DE umfaßt einen optoelektrischen Detektor PD1, dem die aus dem optischen Ausgang oA3 ausgekoppelte Signalleistung P3 (Mischsignal MS1) zugeleitet ist, sowie einen anderen, beispielsweise gleichen optoelektrischen Detektor PD2, dem die aus dem anderen optischen Ausgang oA4 ausgekoppelte Signalleistung P4 (Mischsignal MS2) zugeleitet ist.

Jeder der beiden optoelektrische Detektoren PD1 und PD2 ist in einem zugeordneten elektrischen Schaltkreis der optischen Detektoreinrichtung DE1 angeordnet, der ersatzschaltbildmäßig dargestellt ist. Jeder Schaltkreis weist einen zum zugeordneten optoelektrischen Detektor PD1 bzw. PD2 parallel geschalteten Arbeitswiderstand R1 bzw. R2 und eine parallel zu diesem Widerstand geschaltete Kapazität C1 bzw. C2 auf, welche die gesamte Kapazität im betreffenden elektrischen Kreis kennzeichnet. In jeden Schaltkreis ist auch eine zugeordnete Gleichspannungsquelle U1 bzw. U2 geschaltet, die als eine Vorspannungsquelle dient.

In jedem Schaltkreis sind der Arbeitswiderstand R1 bzw. R2 und die Kapazität C1 bzw. C2 so gewählt, daß die betreffenden Zeitkonstanten

$$\tau1 = R1 \cdot C1 \text{ und } \tau2 = R2 \cdot C2$$

jeweils sehr groß gegenüber $1/2 \cdot \pi \cdot f1$ und damit auch gegenüber $\tau = R \cdot C$ der genannten bisherigen Vorrichtung sind.

Die Bandreiten B1 bzw. B2 der beiden Schaltkreise sind gegeben durch

$$B1 = 1/2 \cdot \pi \cdot \tau1 \text{ und } B2 = 1/2 \cdot \pi \cdot \tau2$$

Vereinfachte Verhältnisse ergeben sich, wenn B1 = B2 = B gewählt wird. Dies wird im folgenden angenommen.

Zur Abschätzung des Vorteils der Vorrichtung nach Figur 2 gegenüber der genannten bisherigen Vorrichtung wird zunächst für die bisherige Vorrichtung die notwendige Größe des Arbeitswiderstandes R abgeschätzt. Bei einem zugelassenen Abfall von 3 dB gilt

$$R = 1/2\pi \cdot f1 \cdot C.$$

Für die Schaltkreise der Vorrichtung nach Figur 2 ist nur eine zeitliche Auflösung entsprechend der Bandbreite B erforderlich, es gilt daher für die Arbeitswiderstände

$$R1 = 1/2 \cdot \pi \cdot B \cdot C1$$
$$R2 = 1/2 \cdot \pi \cdot B \cdot C2.$$

Da f1 sehr groß gegenüber B ist, folgt daß R1 und R2 jeweils sehr groß gegenüber R ist. Dies bedeutet, daß die Vorrichtung nach Figur 2 einen wesentlichen Empfindlichkeitsvorteil gegenüber der Vorrichtung nach Figur 1 hat.

Es ist hier zunächst zu beachten, daß ein Lock-in-Verstärker Rauschen innerhalb einer Bandbreite von f1-B bis f1 + B aufnimmt, also innerhalb eines Bandes der Breite $2 \cdot B$, wenn B die Bandbreite des Filters am Signalausgang angibt. Die Anordnung nach Figur 2 nimmt nur Rauschen innerhalb des Bandes B auf, welche der Bandbreite der beiden Schaltkreise entspricht. Dies ist ein zusätzlicher Vorteil.

Unter der Annahme, daß R1 = R2 und C1 = C2 gilt, beträgt das Verhältnis zwischen dem Signal-Rausch-Verhältnis $(S/N)_1$ der Vorrichtung nach Figur 2 und dem Signal-Rausch-Verhältnis (S/N) der Vorrichtung nach Figur 1

$$(S/N)_1/(S/N) = 2 R1/R = 2 f1/B.$$

Da f1 im MHz-Bereich und B im Hz-Bereich liegen kann, ist bei der Vorrichtung nach Figur 2 ein sehr großer Vorteil zu erwarten.

Die an den Arbeitswiderständen R1 bzw. R2 der Vorrichtung nach Figur 2 abgegriffenen elektrischen Signale E11 bzw. E21 werden Eingängen EV1 bzw. EV2 zugeordneter Vorverstärker V1 bzw. V2 zugeleitet und in diesen Verstärkern jeweils verstärkt. Die von den Verstärkern abgegebenen verstärkten elektrischen Signale VE11 bzw. VE21 werden verschiedenen Eingängen (Eingang + und Eingang -) eines Differenzverstärkers DV zugeleitet, an dessen Ausgang DVA das elektrische Ausgangssignal AS entnehmbar ist, das der Amplitude der Intensitätsschwankung des einen Signals LS proportional ist.

Es seien nun zwei verschiedene Ausführungsformen der optischen Mischeinrichtung beschrieben, die als Mischstufe MSt1 verwendet werden können.

Eine Ausführungsform der optischen Mischeinrichtung besteht aus dem steuerbaren Richtkoppler StRK der Vorrichtung nach Figur 2, der oben bereits zum Teil beschrieben worden ist.

In einem eingangsseitigen Abschnitt AB1 der Koppelstrecke L dieses Richtkopplers StRK ist ein Elektrodenpaar EL1, EL2 angeordnet, das aus einer dem Wellenleiter WL1 zugeordneten Elektrode EL1 und einer dem Wellenleiter WL2 zugeordneten Elektrode EL2 besteht.

In einem ausgangsseitigen Abschnitt der Koppelstrecke L ist ein weiteres Elektrodenpaar EL3, EL4 angeordnet, das aus einer dem Wellenleiter WL1 zugeordneten Elektrode EL3 und einer dem Wellenleiter WL2 zugeordneten Elektrode EL4 besteht.

Die Elektrodenpaare EL1, EL2 und EL3, EL4 dienen zur Erzeugung des zeitlich schwankenden elektrischen Feldes im Bereich der Wellenleiter WL1 und WL2, aus dem die zeitlich schwankende Koppelstärke des Richtkopplers StRK resultiert.

Beide Elektrodenpaare EL1, EL2 und EL3, EL4 sind mit dem anderen Signal OS der bestimmten Frequenz f0 derart beaufschlagt, daß ein Elektrodenpaar ein elektrisches Feld und das andere Elektrodenpaar ein anderes elektrisches Feld erzeugt, das entgegengesetzt zum einen elektrischen Feld gerichtet ist.

Dies kann beispielsweise dadurch erreicht werden, daß einem Wellenleiter zugeordnete Elektroden der beiden Elektrodenpaare EL1, EL2 und EL3, EL4, beispielsweise die dem Wellenleiter WL1 zugeordneten Elektroden EL1 und EL3 auf Masse gelegt werden und die dem anderen Wellenleiter WL2 zugeordneten Elektroden EL2 und EL4 der beiden Elektrodenpaare EL1, EL2 und EL3, EL4 mit dem anderen Signal OS so beaufschlagt werden, daß einer dieser beiden Elektroden EL2 oder EL4, beispielsweise der Elektrode EL2, das andere Signal OS und der anderen Elektrode EL4 das negierte andere Signal $\overline{OS}$ zugeführt wird, das im Gegentakt zum anderen Signal OS schwingt. Diese Möglichkeit ist bei der Vorrichtung nach Figur 2 verwendet.

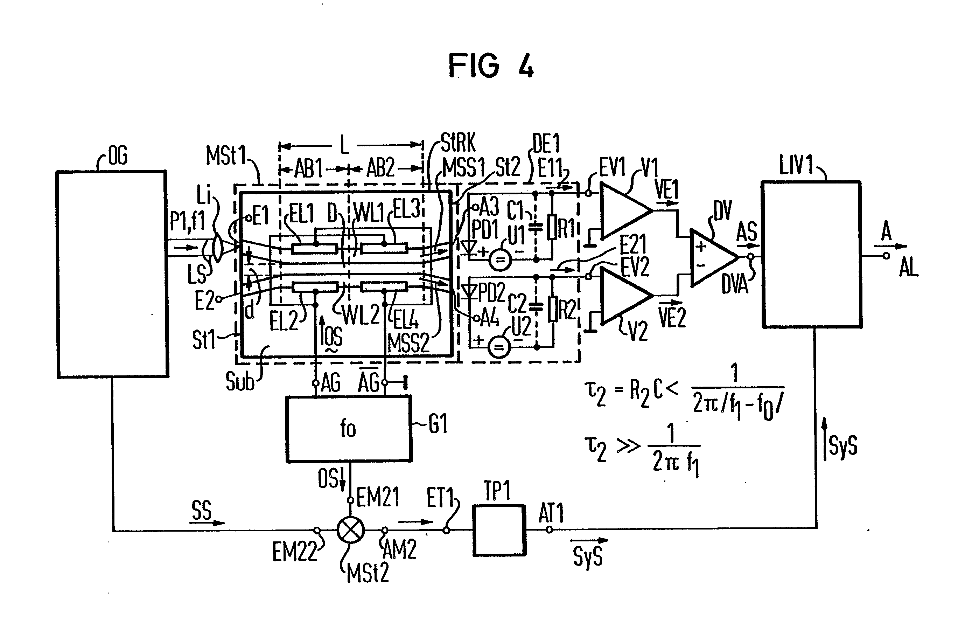

Eine andere Möglichkeit besteht beispielsweise darin, daß bei einem der beiden Elektrodenpaare EL1, EL2 und EL3, EL4 die einem Wellenleiter zugeordnete Elektrode auf Masse und die dem anderen Wellenleiter zugeordnete Elektrode mit dem anderen Signal OS beaufschlagt wird, während bei dem anderen Elektrodenpaar die dem anderen Wellenleiter zugeordnete Elektrode auf Masse gelegt und die dem einen Wellenleiter zugeordnete Elektrode mit dem anderen Signal OS beaufschlagt wird. Diese Möglichkeit ist bei der Vorrichtung nach Figur 4 realisiert, die später noch beschrieben wird.

In jedem Fall schwanken die Stärken der durch die beiden Elektrodenpaare EL1, EL2 und EL3, EL4 erzeugten und entgegengesetzt gerichteten elektrischen Felder synchron mit dem anderen Signal OS, und entsprechend schwankt auch die Koppelstärke des Richtkopplers StRK.

Bei der Vorrichtung nach Figur 2 mit dem soeben beschriebenen steuerbaren Richtkoppler StRK ist wie bei der Vorrichtung nach Figur 1 vorausgesetzt, daß die bestimmte Frequenz f0 des anderen Signals OS gleich der Modulationsfrequenz f1 ist, so daß |f1-f0| = 0 ist.

Ähnlich wie bei der Vorrichtung nach Figur 1 werden das elektrische andere Signal OS und das dazu negierte Signal $\overline{OS}$ von einem elektronischen Oszillator G1 geliefert, dessen Frequenz f0 durch externe Synchronisation mit der Frequenz f1 synchronisiert wird. Dazu wird auch hier die Frequenz f0 des Oszillators G1 gleich der Modulationsfrequenz f1 gewählt und eine Phasenabgleichung zwischen den beiden Signalen mit den Frequenzen f0 und f1 durchgeführt. Wie bei der Vorrichtung nach Figur 1 erfolgt dies mittels eines Phasenschiebers Ph, dem über einen Eingang EPh ein elektrisches Signal SS zugeführt wird, das in Frequenz und Phase mit dem optischen einen Signal LS übereinstimmt. Nach dem Phasenabgleich stimmen dann auch die an Ausgängen AG und $\overline{AG}$ des Oszillators G1 abgegebenen Signale OS und $\overline{OS}$ in Frequenz und Phase mit dem einen Signal LS überein.

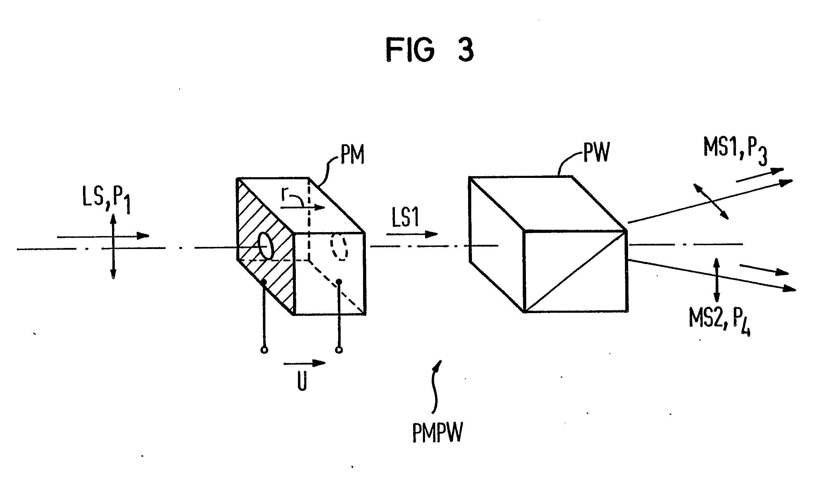

Die andere Ausführungsform der optischen Mischeinrichtung besteht aus dem in Figur 3 dargestellten elektrooptischen Modulator PMPW, der bei der Vorrichtung nach Figur 2 an die Stelle des Richtkopplers StRK treten kann.

Dieser elektrooptische Modulator PMPW besteht aus einem Polarisationsmodulator PM, beispielsweise ein Kristall, der den elektrooptischen Effekt zeigt, und einer Polarisationsweiche PW. In den Polarisationsmodulator PM wird das optische eine Signal LS als ein in bestimmter Weise polarisiertes Lichtsignal eingekoppelt. Die Polarisation des eingekoppelten Lichtsignals ist in dem Polarisationsmodulator PM in Abhängigkeit von dem anderen Signal OS in Form einer Spannung u veränderbar. Das aus dem Polarisationsmodulator PM ausgekoppelte Lichtsignal LS1 mit der beeinflußten Polarisation wird der Polarisationsweiche PW zugeleitet, in der dieses Lichtsignal LS1 in zwei getrennte polarisierte Lichtsignalanteile aufgespalten wird, die zueinander orthogonal polarisiert sind und von denen einer dem einen optoelektrischen Detektor PD1 als Mischsignal MS1 und der andere dem anderen Detektor PD2 als Mischsignal MS2 zuleitbar ist.

Beispielsweise kann der Polarisationsmodulator PM ein KDP-Kristall sein, der den Polarisationszustand des linear polarisierten einen Signals LS in Abhängigkeit von einer am Kristall in Ausbreitungsrichtung r des Signals im Kristall angelegten Spannung U verändert, so daß das aus dem Kristall wieder ausgekoppelte Signal LS1 je nach Größe der Spannung u mehr oder weniger elliptisch polarisiert ist.

Die Polarisationsweiche PW kann beispielsweise ein Nicolsches Prisma sein, welches das zugeführte Signal LS1 in bekannter Weise in einen linear polarisierten ordentlichen Lichtstrahl und einen dazu senkrecht polarisierten außerordentlichen Lichtstrahl aufspaltet, welche als die Mischsignale MS1 und MS2 verwendet werden. Das andere Signal OS ist dabei als zeitlich sich verändernde Spannung u an den Kristall PM anzulegen.

Diese andere Ausführungsform der optischen Mischeinrichtung kann mit sich frei ausbreitenden Lichtstrahlen arbeiten.

In der Figur 4 ist eine Abwandlung der Vorrichtung nach Figur 2 dargestellt, bei der im Unterschied zur Vorrichtung nach Figur 2 die Modulationsfrequenz f1 des einen Signals LS und die bestimmte Frequenz f0 des anderen Signals OS voneinander verschieden sind, so daß die Differenzfrequenz |f1-f0| verschieden von 0 ist, wobei aber f1 sehr groß gegenüber der Differenzfrequenz ist.

Soweit die Vorrichtung nach der Figur 4 mit der Vorrichtung nach Figur 2 übereinstimmt, sind in beiden Figuren die gleiche Bezugszeichen verwendet und es wird diesbezüglich auf die Beschreibung der Vorrichtung nach Figur 2 verwiesen.

Ein unwesentlicher Unterschied der Vorrichtung nach Figur 4 gegenüber der Vorrichtung nach Figur 2 besteht in der bereits beschriebenen Schaltung der Elektroden EL1 bis EL4 des Richtkopplers StRK. So liegt beispielsweise beim Richtkoppler StRK nach Figur 4 die dem Wellenleiter WL1 zugeordnete Elektrode EL1 des Elektrodenpaares EL1, EL2 auf Masse, während beim anderen Elektrodenpaar EL3, EL4 die dem anderen Wellenleiter WL2 zugeordnete Elektrode EL4 auf Masse liegt. Dies ist beispiels weise so realisiert, daß diese beiden Elektroden EL1 und EL4 durch elektrische Leitungen mit dem auf Masse gelegten Ausgang $\overline{AG}$ des Oszillators G1 verbunden sind. Die Elektroden EL2 und EL3 sind durch elektrische Leitungen mit dem Ausgang AG des Oszillators G1 für das andere Signal OS verbunden.

Anstelle des Richtkopplers StRK könnte auch bei der Vorrichtung nach Figur 4 jeder andere elektrooptische Modulator verwendet werden, der entsprechend arbeitet, beispielsweise der Modulator nach Figur 3.

Bedingt durch die verschiedenen Frequenzen f1 und f0 enthalten die an den optischen Ausgängen oA3 und oA4 abgegebenen Mischsignale MS1 und MS2 ein Schwebungssignal der Differenzfrequenz |f1-f0|, so daß auch die von den optoelektrischen Detektoren PD1 und PD2 abgegebenen elektrischen Signale E11 bzw. E21, die verstärkten Signale VE1 bzw. VE2 und schließlich auch das Ausgangssignal AS des Differenzverstärkers DV ein Schwebungssignal dieser Differenzfrequenz |f1-f0| enthalten.

Das vom Differenzverstärker DV abgegebene Ausgangssignal AS mit dem Schwebungssignal wird von einem Lock-in-Verstärker LIV1 aufgenommen, der mit einem Synchronisationssignal SyS der Differenzfrequenz |f1-f0| synchronisiert wird, wobei an einem Ausgang AL dieses Lock-in-Verstärkers LIV1 ein Signal A entnehmbar ist, das der Amplitude der Intensitätsschwankung des einen Signals LS proportional ist.

Zur Gewinnung des Synchronisationssignals SyS ist eine elektronische Mischstufe MSt2 vorgesehen. Einen Eingang EM21 dieser Mischstufe MSt2 wird das andere Signal OS der bestimmten Frequenz f0 und einem anderen Eingang EM22 das Signal SS zugeführt, das in Frequenz und Phase mit dem einen optischen Signal LS übereinstimmt. Das an einem Ausgang AM2 abgegebene Ausgangssignal der Mischstufe MSt2 enthält ebenfalls ein Schwebungssignal der Differenzfrequenz |f1-f0| und wird einem Eingang ET1 eines Tiefpaßfilters TP1 zugeleitet, welches alle Frequenzen im zugeleiteten Signal, die größer als die Diffe renzfrequenz |f1-f0| sind, unterdrückt, und an einem Ausgang AT1 das Synchronisationssignal SyS abgibt, das nur noch die Differenzfrequenz |f1-f0| enthält.

Auch bei dieser Vorrichtung nach Figur 4 müssen die Zeitkonstanten $\tau 1 = R1 \cdot C1$ und $\tau 2 = R2 \cdot C2$ jeweils sehr groß gegenüber $1/2 \cdot \pi \cdot f1$ sein. Darüberhinaus müssen diese Zeitkonstanten $\tau 1$ und $\tau 2$ oder/und die Frequenz |f1-f0| so gewählt werden, daß jede Zeitkonstante $\tau 1$ und $\tau 2$ kleiner als $1/2 \cdot \pi \cdot$ |f1-f0| ist.

Bei entsprechender Wahl der Differenzfrequenz |f1-f0|, beispielsweise im Bereich um 100 Hz, erhält man, wenn f1 wesentlich größer als diese Differenzfrequenz ist, noch einen großen Gewinn im Signal-Rausch-Verhältnis, das Funkelrauschen wird jedoch durch diese Maßnahme reduziert.

## Ansprüche

1. Vorrichtung zum Detektieren intensitätsmodulierter Lichtsignale, bestehend
- aus einer optischen Detektoreinrichtung (DE1) mit einem optoelektrischen Detektor (PD1, PD2) zur Umwandlung von Lichtintensität in entsprechende elektrische Leistung und einem an den Detektor angeschlossenen Arbeitswiderstand (R1, R2), und
- aus einer Mischstufe (MSt1), in die ein der modulierten und zu detektierenden Intensität ($P_1$) der Lichtsignale entsprechendes Signal (LS) und ein mit diesem einen Signal (LS) synchronisiertes anderes Signal (OS) mit einer von einer Modulationsfrequenz (f1) des einen Signals (LS) bestimmten Frequenz (f0) einkoppelbar sind und aus der ein aus dem einen und anderen Signal (LS, OS) gebildetes Mischsignal (MS1, MS2) entnehmbar ist,

**dadurch gekennzeichnet,**

- daß die Mischstufe (MSt1) aus einer optischen Mischeinrichtung (StRK, EMPW) besteht, in die das eine Signal (LS) als Lichtsignal einkoppelbar ist und aus der das Mischsignal (MS1, MS2) als Lichtsignal entnehmbar ist, und
- daß das Mischsignal (MS) dem optoelektrischen Detektor (PD1, PD2) zugeleitet ist.

2. Vorrichtung nach Anspruch 1, **dadurch gekennzeichnet,** daß die optische Mischeinrichtung (StRK, EMPW) zusätzlich neben einem optischen Ausgang (oA3, oA4), an dem das Mischsignal (MS1, MS2) entnehmbar ist, einen zweiten optischen Ausgang (oA4 bzw. oA3) aufweist, an dem gleichzeitig ein zweites Mischsignal (MS2 bzw. MS1) entnehmbar ist, wobei die Summe aus den Intensitäten (P3, P4) der Mischsignale zu jedem Zeitpunkt gleich der mit einem konstanten Faktor kleiner als 1 oder gleich 1 multiplizierten Intensität (P1) des einen Signals (LS) zu diesem Zeitpunkt ist.

3. Vorrichtung nach Anspruch 2, **dadurch gekennzeichnet,** daß die optische Detektoreinrichtung (DE1) zusätzlich neben dem einen optoelektrischen Detektor (PD1, PD2) einen zweiten optoelektrische Detektor (PD2 bzw. PD1) zur Umwandlung von Lichtintensität in entsprechende elektrische Leistung aufweist, dem das zweite Mischsignal (MS2) zugeleitet ist, und neben dem einen Arbeitswiderstand (R1, R2) einen zweiten Arbeitswiderstand (R2 bzw. R1) aufweist, der an den zweiten optoelektrischen Detektor (PD2 bzw. PD1) angeschlossen ist.

4. Vorrichtung nach Anspruch 3, **dadurch gekennzeichnet,** daß ein an dem einen Arbeitswiderstand (R1 bzw. R2) abgegriffenes elektrisches Signal (E11 bzw. E21) einem Differenzeingang (+ bzw. -) eines Differenzverstärkers (DV) und ein an dem anderen Arbeitswiderstand (R2 bzw. R1) abgegriffenes elektrisches Signal (E21 bzw. E11) einem anderen Differenzeingang (- bzw. +) des Differenzverstärkers (DV) zugeleitet ist, wobei das eine und andere Signal (E11, E22) so abgegriffen werden, daß ihre Schwankungen die gleiche Amplitude haben.

5. Vorrichtung nach einem der vorhergehenden Ansprüche, **dadurch gekennzeichnet,** daß die Frequenz (f0) des anderen Signals (OS) gleich der Modulationsfrequenz (f1) des einen Signals (LS) ist und die beiden Signale (LS, OS) zueinander synchronisisert sind.

6. Vorrichtung nach einem der Ansprüche 1 bis 4, **dadurch gekennzeichnet,** daß die bestimmte Frequenz (f0) des anderen Signals (OS) verschieden von der Modulationsfrequenz (f1) des einen Signals (LS) ist, und daß ein Lock-in-Verstärker (LIV1) vorgesehen ist, der ein aus der Detektoreinrichtung (DE1) stammendes Signal aufnimmt und durch ein Synchronisationssignal (SyS) synchronisiert ist, dessen Frequenz gleich dem Betrag (|f1-f0|) der Differenz (f1-f0) zwischen der Modulationsfrequenz (f1) und der bestimmten Frequenz (f0) ist.

7. Vorrichtung nach Anspruch 4 und 6, **dadurch gekennzeichnet,** daß der Lock-in-Verstärker (LIV1) das Ausgangssignal (AS) des Differenzverstärkers (DV) aufnimmt.

8. Vorrichtung nach Anspruch 6 oder 7, **dadurch gekennzeichnet,** daß zur Erzeugung des Synchronisationssignals (SyS) eine elektronische Mischstufe (MSt2) vorgesehen ist, die das andere Signal (OS) der bestimmten Frequenz (f0) mit einem in Frequenz und Phase mit dem einen Signal (LS) übereinstimmenden elektrischen weiteren Signal (SS) mischt, und daß ein Tiefpaßfilter (TP1) vorgesehen ist, das aus einem Ausgangssignal der elektronischen Mischstufe (MSt2) die Frequenzen ausfiltert, die größer als der Betrag (|f1-f0|) der Differenz (f1-f0) zwischen der Modulationsfrequenz (f1) und der bestimmten Frequenz (f0) sind, und daß das Ausgangssignal des Tiefpaßfilters als das Synchronisationssignal (SyS) verwendet ist.

9. Vorrichtung nach einem der vorhergehenden Ansprüche, **dadurch gekennzeichnet,** daß die optische Mischeinrichtung (StRK, PMPW) einen elektrooptischen Modulator mit einem optischen Eingang (oE1) zum Einkoppeln des optischen einen Signals (LS) und mit einem oder zwei optischen Ausgängen (oA3, oA4) zum Auskoppeln des einen oder einen und anderen Mischsignals (MS1, MS2) aufweist, der zumindest mit dem anderen Signal (OS) beaufschlagbar ist, und der einen bestimmten physikalischen Lichtparameter des in den Modulator eingekoppelten einen Signals (LS) entsprechend einer Amplitude des anderen Signals (OS) moduliert.

10. Vorrichtung nach Anspruch 9, **dadurch gekennzeichnet,** daß der elektrooptische Modulator aus einem steuerbaren optischen Richtkoppler (StRK) besteht, dessen Koppelstärke durch das andere Signal (OS) steuerbar ist.

11. Vorrichtung nach Anspruch 10, **dadurch gekennzeichnet,** daß in einem Abschnitt (AB1) des Richtkopplers (StRK) die Koppelstärke durch das andere Signal (OS) und in einem anderen Abschnitt (AB2) des Richtkopplers (StRK) die Koppelstärke durch das negierte andere Signal ($\overline{OS}$) steuerbar ist.

12. Vorrichtung nach Anspruch 9, **dadurch gekennzeichnet,** daß der elektrooptische Modulator (PMPW) aus einem Polarisationsmodulator (PM) und einer Polarisiationsweiche (PW) besteht, wobei in dem Polarisationsmodulator (PM) die Polarisation (P) des als polarisiertes Lichtsignal eingekoppelten einen Signals (LS) in Abhängigkeit von dem anderen Signal (OS) variierbar ist, und wobei das aus dem Polarisationsmodulator (PM) ausgekoppelte Lichtsignal (LS1) mit der beeinflußten Polarisation der Polarisationsweiche (PW) zugeleitet ist, die dieses Lichtsignal (LS1) in zwei getrennte und zueinander orthogonal polarisierte Signalanteile aufspaltet, von denen jeder einem optoelektrischen Detektor als ein Mischsignal zuleitbar ist.

**FIG 1**

FIG 2

EP 0 302 275 A2

# FIG 3

EP 0 302 275 A2

# FIG 4

$$\tau_2 = R_2 C < \frac{1}{2\pi / f_1 - f_0 /}$$

$$\tau_2 \gg \frac{1}{2\pi\, f_1}$$

EP 0 302 275 A2